# EUROPÄISCHE PATENTSCHRIFT

(11) **EP 1 200 279 B1**
(45) Veröffentlichungstag und Bekanntmachung des Hinweises auf die Patenterteilung: **31.01.2007**
(21) Anmeldenummer: 99948687.1
(22) Anmeldetag: 22.07.1999
(51) Int. Cl.: B60J 5/04

(54) **ANORDNUNG ZUM EINBAU IN EINE FAHRZEUGTÜR**
SYSTEM TO BE FITTED IN A VEHICLE DOOR
ENSEMBLE A MONTER DANS UNE PORTIERE DE VEHICULE

(43) Veröffentlichungstag der Anmeldung: 02.05.2002
(73) Patentinhaber: Brose Fahrzeugteile GmbH & Co. KG, Coburg, 96450 Coburg (DE)
(72) Erfinder: PLEISS, Eberhard, D-74193 Schwaigern (DE)
(74) Vertreter: Baumgärtel, Gunnar
(86) Internationale Anmeldenummer: PCT/DE1999/002285
(87) Internationale Veröffentlichungsnummer: WO 2001/007277

(56) Entgegenhaltungen:
- EP-A- 0 563 742
- EP-A- 0 579 535
- EP-A- 0 794 076
- DE-A- 19 747 709
- GB-A- 2 250 534

## Beschreibung

Die Erfindung betrifft eine Anordnung zum Einbau in eine Fahrzeugtür mit einem Fensterheber zum Heben und Senken einer Fensterscheibe der Fahrzeugtür und einem Schließsystem zum Verschließen und zum Öffnen der Fahrzeugtür nach dem Oberbegriff des Anspruchs 1.

Aus der DE 195 11 294 A1 ist eine Kraftfahrzeugtür mit einem Türinnenblech, einem Türaußenblech und einem Türfensterrahmen sowie mit einer in einer Scheibenführung des Türfensterrahmens geführten, auf und nieder bewegbaren Fensterscheibe bekannt. Diese Kraftfahrzeugtür weist ferner ein Türschloß, eine Betätigungseinrichtung für das Türschloß, einen Türaußengriff für die Betätigungseinrichtung und einen Fensterheber auf. Dabei sind das Türschloß und ein Aufnahmeteil für den. Türaußengriff mit Hilfe eines Trageelementes zu einem Einbaumodul vereinigt und das Türinnenblech sowie -außenblech zur Einführung bzw. Montage dieses Einbaumoduls eingerichtet. In dem Einbaumodul ist ein Mehrfunktionsteil angeordnet, welches eine Tragplatte für das Türschloß und das daran befestigte Türschloß, ein Verlängerungsbauteil der Scheibenführung und ein Anschlußteil aufweist, an das das Aufnahmeteil für den Türaußengriff angeschlossen ist.

Mittels des in der DE 195 11 294 A1 beschriebenen Einbaumoduls läßt sich der Einbau eines Türschlosses in eine Kraftfahrzeugtür vereinfachen, da Teile des Türschlosses sowie der zugehörigen Betätigungseinrichtung außerhalb der Tür vormontiert und anschließend komplett in diese eingesetzt werden können.

Auch die DE 197 47 709 A1 beschreibt eine Trägerplatte einer Fahrzeugtür mit einem Fensterheber, der mittels eines Motors und eines Übertragungsmechanismus eine Fensterscheibe auf und ab bewegt. Die Fensterscheibe ist dabei über einen Mitnehmer mit einer Führungsschiene verbunden, die ebenfalls an der Trägerplatte angeordnet ist. Auf der Trägerplatte sind außerdem Mittel zum Öffnen und Schließen der Fahrzeugtür angeordnet.

Der Erfindung liegt das Problem zugrunde, die Montage einer Fahrzeugtür noch weiter zu verbessern und zu vereinfachen.

Dieses Problem wird erfindungsgemäß durch die Schaffung einer Anordnung zum Einbau in eine Fahrzeugtür mit den Merkmalen des Patentanspruchs 1 gelöst.

Danach ist vorgesehen, daß zumindest ein Teil des Schließsystems der Fahrzeugtür mit einer Baugruppe des Fensterhebers eine vorgefertigte Baueinheit bildet, die zur Befestigung an einer tragenden Platte der Fahrzeugtür vorgesehen ist.

Im Gegensatz zur technischen Lehre der DE 195 11 294 A1, bei der es um die Integration verschiedener Komponenten des Schließsystems der Fahrzeugtür zu einem einheitlichen Einbaumodul geht (wobei lediglich noch ein Teil der Fensterführung, in deren Nähe sich das Türschloß üblicherweise befindet, einbezogen ist), wird mit der vorliegenden Erfindung eine Integration zweier ganz unterschiedlicher Schließsysteme eines Kraftfahrzeugs, nämlich einerseits eines Schließsystems zum Verschließen und Öffnen der Fahrzeugtür und andererseits eines Schließsystems zum Öffnen und Schließen der Fensterscheibe erreicht. Hierdurch wird der Integrationsgrad der Komponenten im Bereich der Fahrzeugtür weiter erhöht, was eine einfachere, schnellere, zuverlässigere und kostengünstigere Montage der Fahrzeugtür gestattet.

Unter den Baugruppen eines Fensterhebers werden dabei die Antriebseinheit des Fensterhebers sowie die Mittel zur Übertragung der Antriebskraft von dieser Antriebseinheit auf die Fensterscheibe verstanden (wie z.B. Getriebelemente, Zugmittel und Führungsschiene bei einem Seilfensterheber etc.), nicht aber seitliche Führungselemente zur Führung der Kanten der Fensterscheibe, die unabhängig von dem Fensterheber sind.

Das Einbaumodul, das durch das Schließsystem der Fahrzeugtür (oder einen Teil davon) sowie mindestens eine Baugruppe des Fensterhebers gebildet wird, ist zur Montage an einer tragenden Platte der Fahrzeugtür, also insbesondere dem Türinnenblech oder einem Türmodulträger vorgesehen; wobei als Türmödulträger eine großflächige Trägerplatte für ein Türmodul bezeichnet wird, die auf einen hierfür vorgesehenen Ausschnitt in einer Fahrzeutür aufgesetzt wird und eine Vielzahl von Funktionskomponenten einer Fahrzeugtür, wie z.B. das Schließsystem, den Fensterhebern, einen Seitenairbag, Lautersprecher und dergl. trägt. Es ist wesentlich, daß das nach der vorliegenden Erfindung gebildete Einbaumodul aus einem Teil des Schließsystems der Fahrzeugtür und mindestens einer Baugruppe des Fensterhebers unabhängig von dieser tragenden Platte gebildet wird. Es geht bei der vorliegenden Erfindung also darum, einen Teil des Schließsystems der Fahrzeugtür sowie mindestens eine Baugruppe des Fensterhebers unmittelbar zu einer Baueinheit zusammenzufügen, die erst anschließend auf einer tragenden Platte der Fahrzeugtür befestigt wird. Nicht umfaßt sein sollen daher solche bekannten Anordnungen, bei denen ein Fensterheber und ein Schließsystem für eine Fahrzeugtür erst dadurch in ein Modul integriert werden, daß die entsprechenden Teile auf einer großflächigen Trägerplatte der Fahrzeugtür montiert werden, die weder ein Bestandteil des Fensterhebers noch ein Bestandteil des Schließsystems der Fahrzeugtür ist.

Bei einer bevorzugten Ausführungsform der Erfindung bildet mindestens ein tragendes Bauteil des Fensterhebers, wie z.B. eine Führungsschiene eines Seilfensterhebers oder eine Grundplatte der Antriebseinheit des Fensterhebers, eine vorgefertigte Baueinheit mit mindestens einem tragenden Bauteil des Schließsystems, wie z.B. einer Aufnehme für das Türschloß. Dabei können diese beiden tragenden Bauteile sowohl über zusätzliche Verbindungsmittel als auch einstückig miteinander verbunden sein.

Nach einer anderen Ausführungsform der Erfindung dient mindestens ein tragendes Bauteil des Fensterhebers, wie z.B. die oben erwähnte Führungsschiene bzw. Grundplatte, zugleich zur Aufnahme eines Funktionselementes des Schließsystems, wie z.B. eines Türschlosses oder eines Türaußengriffes.

Wichtig ist, daß es sich bei den vorstehend erwähnten tragenden Bauteilen des Fensterhebers bzw. des Schließsystems der Fahrzeugtür jeweils um tragende Bauteile handelt, die speziell zur Aufnahme von Teilen des Fensterhebers bzw. des Schließsystems ausgebildet sind und dementsprechend einen Bestandteil des Fensterhebers bzw. des Schließsystems bilden.

Eine weitere Erhöhung des Integrationsgrades im Bereich der Fahrzeugtür wird erreicht, wenn auch die Führungsschiene des Fensterhebers und eine zur Aufnahme der Antriebseinheit des Fensterhebers vorgesehene Grundplatte eine vorgefertigte Baueinheit bilden und insbesondere einstückig miteinander verbunden sind. Mit dieser Baueinheit können dann Teile des Schließsystems der Fahrzeugtür zu einem Einbaumodul zusammengefaßt werden. Alternativ kann es sich bei der Antriebseinheit und der Führungsschiene des Fensterhebers aber auch um separate, getrennte Baugruppen handeln, von denen eine zur Bildung einer Baueinheit mit Teilen des Schließsystems der Fahrzeugtür vorgesehen ist.

Als Teile des Schließsystems der Fahrzeugtür, die mit einer Baugruppe des Fensterhebers zu einer Baueinheit zusammengefaßt werden können, eignen sich insbesondere eine Aufnahme für ein Türschloß, das Türschloß selbst, eine Aufnahme für einen Türaußengriff, der Türaußengriff selbst, eine Aufnahme für einen Türinnengriff und der Türinnengriff selbst; ferner Betätigungselemente, über die der Türinnengriff oder der Türaußengriff mit dem Türschloß gekoppelt sind, um die die (nicht verschlossene) Fahrzeugtür vom Fahrzeuginnenraum bzw. von außen her öffnen zu können. Welche dieser Komponenten in die Schaffung einer Baueinheit einbezogen werden, hängt von den jeweiligen Bedingungen innerhalb einer Fahrzeugtür ab.

Unter einer Aufnahme für das Türschloß oder den Türaußengriff oder den Türinnengriff werden hier beliebige Bauteile oder Baugruppen verstanden, die als tragende Bauteile speziell zur Aufnahme des Türschlosses, des Türaußengriffes oder des Türinnengriffes dienen. Dabei kann es sich sowohl um ein flächiges Trägerelement handeln, an dem eines der genannten Funktionselemente, ggf. über einen weiteren Halter, befestigt ist, als auch um einen solchen Halter, wie z.B. einen Türaußengriffhalter. Die Begriffe Türaußengriff und Türinnengriff sollen sowohl einen einfachen Zuziehgriff als auch einen Türöffner sowie eine Kombination dieser Elemente umfassen.

In einer bevorzugten Ausführungsform bildet die Aufnahme für das Türschloß eine vorgefertigte Baueinheit mit der Grundplatte für die Antriebseinheit des Fensterhebers, wobei diese beiden Teile einstückig miteinander verbunden sein können oder auch eine übliche Grundplatte für eine Antriebseinheit einfach mit zusätzlichen Befestigungsstellen für ein Türschloß versehen sein kann. Diese Ausführungsform der Erfindung ist sowohl auf solche Fälle anwendbar, in denen die Grundplatte für die Antriebseinheit zusätzlich eine Baueinheit mit der Führungsschiene des Fensterhebers bildet, als als auch bei Verwendung einer separaten Grundplatte.

Insbesondere bei einem sogenannten außenliegenden Fensterheber, der zwischen dem Türaußenblech und der Fensterscheibe angeordnet ist, ist es vorteilhaft, daß zumindest die Aufnahme für den Türaußengriff eine vorgefertigte Baueinheit mit der Führungsschiene des Fensterhebers bildet und sich dabei in Richtung auf das B-säulenseitige Ende (bei Fahrer- bzw. Beifahrertüren) bzw. C-säulenseitige Ende (bei Fondtüren) der Fahrzeugtür erstreckt.

Bei einem sogenannten innenliegenden Fensterheber, bei dem die Fensterscheibe zwischen dem Türaußenblech und dem Fensterheber angeordnet ist, bildet vorzugsweise zumindest die Aufnahme für den Türinnengriff eine vorgefertigte Baueinheit mit der Führungsschiene und erstreckt sich in Richtung auf das A-säulenseitige Ende (bei Fahrer- bzw. Beifahrertüren) bzw. B-säulenseitige Ende (bei Fondtüren) der Fahrzeugtür.

Bei einem doppelsträngigen Seilfensterheber mit zwei nebeneinander verlaufenden Führungsschienen werden vorzugsweise sowohl ein Träger für das Türschloß als auch eine Aufnahme für den Türaußengriff als vorgefertigte Baueinheit mit der B-säulenseitigen Führungsschiene des Fensterhebers zusammengefaßt.

Bei weiteren bevorzugten Anordnungen ist ein Träger für das Türschloß mit der Aufnahme für den Türaußengriff verbunden und die Aufnahme für den Türaußengriff zusätzlich mit der Führungsschiene verbunden, oder es sind das Türschloß und der Türaußengriffhalter über einen gemeinsamen Träger an der Führungsschiene befestigt.

Bei den vorgenannten Ausführungsformen ist jeweils mit Vorteil auf den genannten Aufnahmeelementen das zugehörige Funktionselement des Schließsystems, wie z.B. das Türschloß, der Türaußengriff oder der Türinnengriff, vormontiert. Die entsprechende Baueinheit aus Teilen des Fensterhebers und Teilen des Schließsystems der Fahrzeugtür umfaßt dann nicht nur tragende Bauteile des Schließsystems, sondern auch die zugehörigen Funktionselemente, wie z.B. das Türschloß, den Türinnengriff oder den Türaußengriff.

Nach einer bevorzugten Ausführungsform der Erfindung ist weiterhin vorgesehen, daß die Führungsschiene des Fensterhebers zur verschiebbaren Lagerung an der tragenden Platte der Fahrzeugtür ausgebildet ist, und zwar insbesondere verschiebbar entlang der Längsrichtung des Fahrzeugs. Diese Ausführungsform ist insbesondere dann vorteilhaft, wenn es sich bei der tragenden Platte um eine Trägerplatte für ein Türmodul handelt, die unabhängig von der Fahrzeugtür komplett vormontiert und dann in die Fahrzeugtür eingesetzt wird. Die Führungsschiene des Fensterhebers kann dann (zusammen mit den daran ggf. befestigten Teilen des Schließsystems der Fahrzeugtür) zwischen einer Transport- und Montageposition auf der Trägerplatte und einer Betriebsposition auf der Trägerplatte verschoben werden, wobei die letztgenannte Betriebsposition erst nach dem Einbau der Trägerplatte in die Fahrzeugtür eingenommen wird, um die Führungsschiene und die hiermit verbundenen Teile des Schließsystems der Fahrzeugtür in ihre Betriebspostion innerhalb der Fahrzeugtür zu überführen und dort zu befestigen.

Zusätzlich definiert die tragende Platte der Fahrzeugtür vorzugsweise eine Ausnehmung zur Erleichterung der Montage des Schließsystems, z.B. indem die Trägerplatte einen großflächigen Ausschnitt im Türinnenblech nur teilweise abdeckt.

Weitere Vorteile der Erfindung werden bei der nachfolgenden Beschreibung eines Ausführungsbeispiels anhand der Figuren deutlich werden. Es zeigen:
- Figur 1 -: eine Seitenansicht der Naßraumseite einer Trägerplatte mit vormontierten Funktionskomponenten vor ihrem Einbau in die Türkarosserie;
- Figur 2 -: einen schematisierten Querschnitt durch eine Fahrzeugtür, die mit einer Trägerplatte gemäß Figur 1 ausgerüstet ist;
- Figur 3 -: eine Ansicht einer Türkarosserie mit einem großflächigen Ausschnitt im Türinnenblech zur Ausrüstung mit einer Trägerplatte gemäß Figur 1;
- Figur 4 -: eine Ansicht einer Führungsschiene für einen Seilfensterheber, an der eine Trägerplatte für ein Türschloß sowie eine Trägerplatte für einen Türinnengriffhalter angeformt sind;
- Figur 5 -: eine Ansicht einer Führungsschiene für einen Seilfensterheber, an der eine Trägerplatte für ein Türschloß sowie eine Trägerplatte für einen Türaußengriffhalter angeformt sind;

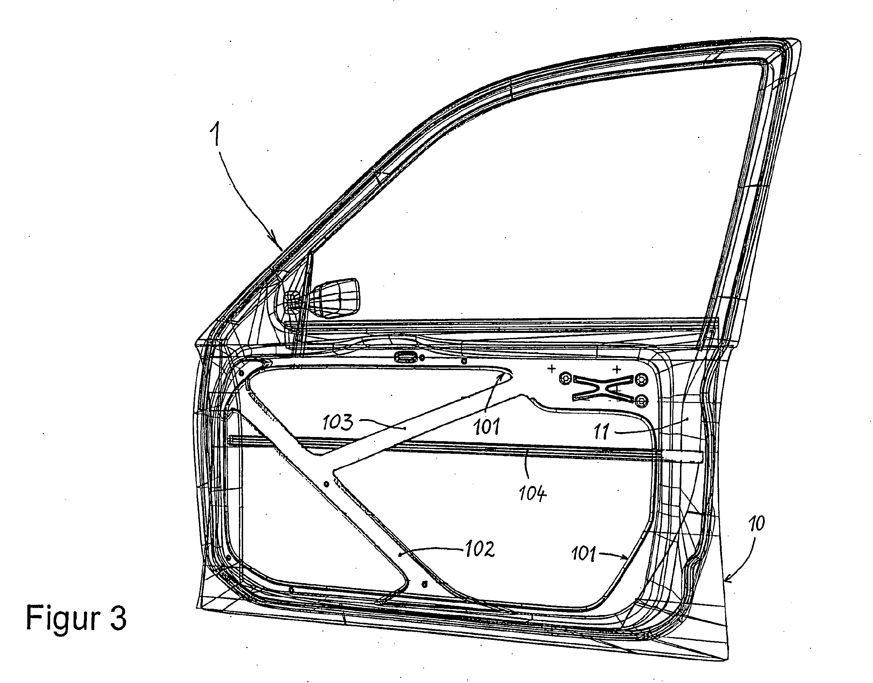

In Figur 3 ist eine Türkarosserie 1 mit einem großflächigen Ausschnitt 101 im Türinnenblech 11 dargestellt, der von Streben 102, 103 zur Erhöhung der Steifigkeit der Türkarosserie 1 durchquert wird. Ein zusätzliches Verstärkungselement 104 dient als Seiteneinfahrschutz. Der großflächige Ausschnitt 101 eignet sich besonders gut zur Komplettierung der Fahrzeugtür mit einem sogenannten Türmodul, dessen Trägerplatte 2 den Ausschnitt 101 zumindest teilweise abdeckt und die wesentlichen Funktionskomponenten der Fahrzeugtür trägt.

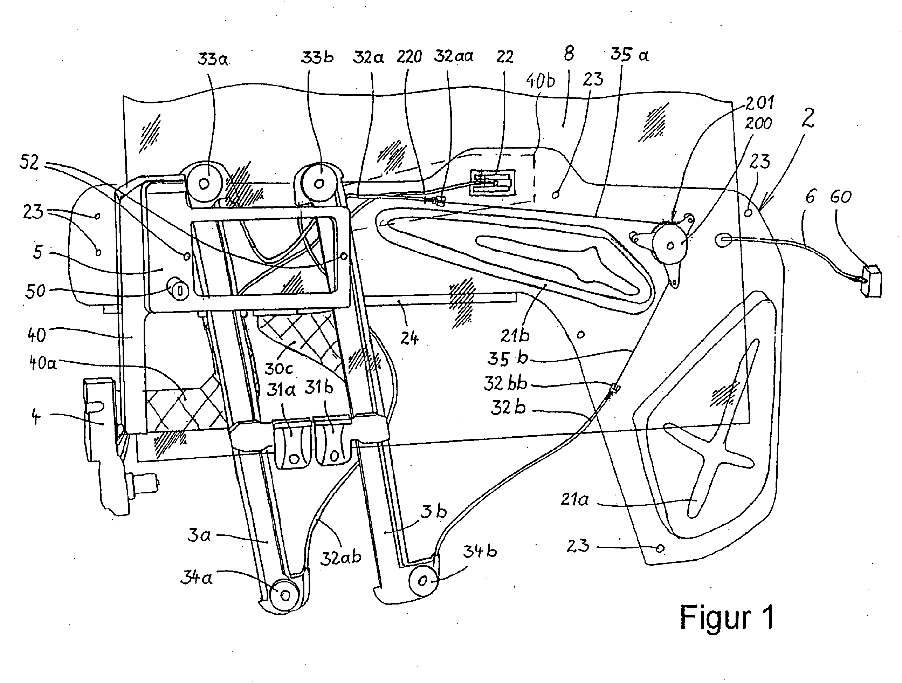

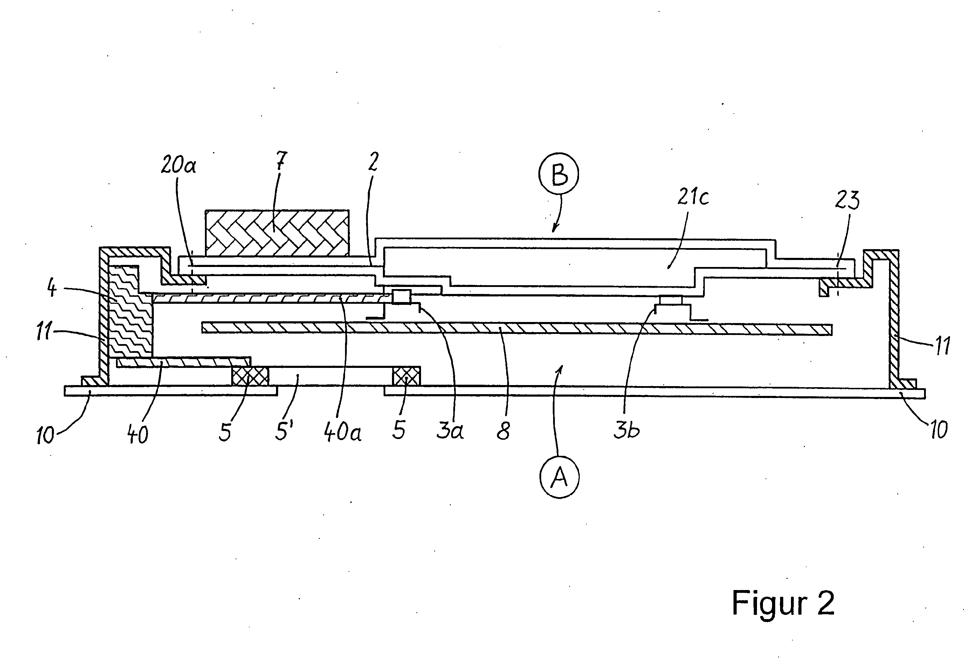

Figur 1 zeigt ein solches Türmodul, das unter anderem mit einem doppelstängigen Bowdenrohr-Fensterheber und einem Schloß 4 sowie weiteren Teilen des Schließsystems der Fahrzeugtür ausgerüstet ist. Mittels des schematischen Querschnitts aus Figur 2, der die wesentlichen Bauelemente des Türmoduls unabhängig von deren tatsächlicher Lage in der Fahrzeugtür schneidet, kann ein besserer Überblick hinsichtlich des erfindungsgemäßen Aufbaus erzielt werden.

An einem im wesentlichen horizontal verlaufenden Rand der Trägerplatte 2 ist eine Schiene 24 vorgesehen, in die paßfähige Gleitstücke der metallischen Führungsschienen 3a, 3b des doppelstängigen Bowdenrohr-Fensterhebers eingreifen, so daß die Führungsschienen 3a, 3b verschiebbar sind. Während die dem Antrieb 200, 201 des Fensterhebers zugewandte (A-säulenseitige) Führungsschiene 3b über einen Träger 30c an der Schiene 24 lagert, steht die andere (B-säulenseitige) Führungsschiene 3a mit der Trägerplatte 2 über einen anderen Träger 40a verschiebbar in Verbindung, wobei an diesem Träger 40a das Schloß 4 und ein weiterer Träger 40, der wiederum einen Außengriffhalter 5 trägt, befestigt sind.

Dadurch daß eine verschiebbare Führungsschiene über speziell ausgebildete Träger mit dem Türschloß und dem Außengriffhalter verbunden ist, gelangen bei der Überführung der verschiebbaren Führungsschiene in die Betriebsposition auch das Schloß und der Außengriffhalter in ihre Sollpositionen, ohne diese Komponenten separat positionieren zu müssen. Bei einem doppelsträgigen Bowdenrohr-Fensterheber stehen die B-säulenseitige Führungsschiene (bei Fahrer- oder Beifahrertür) bzw. die C-säulenseitige Führungsschiene (bei Fondtüren) mit dem Außengriffhalter und/oder dem Türschloß in Verbindung.

Wenn ein verhältnismäßig großer Verschiebeweg notwendig ist, um die Führungsschienen eines doppelsträngigen Bowdenrohr-Fensterhebers in ihre Betriebsposition zu bringen, und insbesondere wenn damit die Notwendigkeit verbunden ist, eine zwischen den Führungsschienen angeordnete Antriebseinheit ebenfalls zu verschieben, sollte die die Seiltrommel beinhaltende Antriebseinheit außerhalb des Zwischenraums zwischen den Führungsschienen angeordnet werden. Bei einer solchen Konstruktion kann die Antriebseinheit starr an die Trägerplatte montiert werden. Zur Herabsetzung der Seilreibungskräfte ist es von Vorteil, die der Antriebseinheit zugewandte Führungsschiene mit einem Seilausgang, der der Antriebseinheit zugewandt ist, und einen Seilausgang, der der anderen Führungsschiene zugewandt ist, auszustatten. Dadurch werden Biegungen des Bowdenrohrs vermieden. Dies wird weiter unten noch näher erläutert werden.

An dem Außengriffhalter 5 ist der Schließzylinder 50 des Schlosses 4 vormontiert; Befestigungsstellen 52 des Außengriffhalters 5 dienen der Anbindung des Außengriffs der Fahrzeugtür.

Die Darstellung gemäß Figuren 1 und 2 zeigt die Funktionspositionen von Fensterheber und Schloß 4. In der (nicht dargestellten) Transport- und Montageposition sind die Führungsschienen 3a, 3b und die damit verbundenen Funktionskomponenten des Schließsystems der fahrzeugtür (Schloß 4 und Außengriffhalter 5) soweit in Richtung der Antriebseinheit 200, 201 verschoben, daß ein problemloses Einfädeln des Fensterhebers und des Schlosses 4 möglich ist. Erst nachdem die Trägerplatte 2 am Türinnenblech 11 befestigt wurde, wird die Führungsschiene 3a zusammen mit dem Schloß 4 in die Betriebsposition verschoben, so daß auch das Schloß 4 an der vorgesehenen Stelle der Türkarosserie befestigt werden kann.

Zur Verbindung der Fensterscheibe 8 mit dem Fensterheber sind an jeder Führungsschiene 3a, 3b Mitnehmer 31a, 31b vorgesehen, die mit der Seilschlaufe fest verbunden sind und die bei Betätigung des Fensterhebers entlang der Führungsschienen 3a, 3b gehoben bzw. gesenkt werden.

Ein Seiltrommelgehäuse 200 mit einer darin gelagerten Seiltrommel 201 sind Bestandteile der Antriebseinheit des Fensterhebers, die auf der Trägerplatte 2 außerhalb des Zwischenraums zwischen den Führungsschienen 3a, 3b montiert ist. Die von dort ausgehenden Seilabschnitte 35a, 35b erstrecken sich bis zu den auf der Trägerplatte 2 abgestützten Bowdenrohrabstützungen 32aa, 32bb geradlinig und ohne Umhüllung durch ein Bowdenrohr. Alle weiteren Seilabschnitte, die sich von den Seilausgängen im Bereich von Umlenkrollen 33a, 33b, 34a, 34b erstrecken, sind in Bowdenrohren 32a, 32b, 32ab geführt und gewährleisten somit die Bewegungsfreiheit der beiden Führungsschienen 3a, 3b.

Demnach ist ein Bereich des von der Antriebseinheit des Fensterhebers ausgehenden Seils ohne Bowdenrohr und ein sich daran anschließender Bereich bis zur Führungsschiene mit Bowdenrohr ausgeführt, wobei das von der Führungsschiene wegweisende Ende des Bowdenrohrs mit einer an der Trägerplatte abgestützten Bowdenrohrabstützungen ausgestattet ist. Zwischen der Bowdenrohrabstützung und dem Seilausgang des Antriebs erstreckt sich das Seil in Analogie zu einem konventionellen Seilfensterheber auf direktem und geradem Weg. Somit wird ein an einer Trägerplatte ortsveränderlicher Bowdenrohr-Fensterheber zur Verfügung gestellt, dessen Seilschlaufe zwischen den Seilausgängen des Antriebs und der Führungsschiene nur teilweise von einem Bowdenrohr umhüllt ist.

Zur Minimierung von Biegungen in den Bowdenrohren und somit zur Minimierung von Reibungsverlusten sind die Seilausgänge in den Umlenkbereichen der der Antriebseinheit 200, 201 zugewandten Führungsschiene 3a entgegengesetzt gerichtet, wobei der über das Bowdenrohr 32b mit der Seiltrommel 201 verbundene Seilausgang der Antriebseinheit zugewandt ist, während der andere Seilausgang der Führungsschiene 3b zugewandt und direkt mit deren unterem Seilausgang über das Bowdenrohr 32ab in Verbindung steht. Mittels eines Bowdenrohres 32a zwischen dem oberen Seilausgang der Führungsschiene 3a und der Seiltrommel 201 ist die Seilschlaufe und damit der Kraftfluß im Fensterheber geschlossen.

Die für das Ausführungsbeispiel ausgewählte Trägerplatte 2 stellt ein doppelwandiges Kunststoffteil dar, das auf der Basis der Blasformtechnik hergestellt wurde. Zur Versteifung der Trägerplatte 2 sind Versteifungsbereiche 21a, 21b vorgesehen, in denen die beiden Wendungen miteinander verbunden sind. Ein oder mehrere Hohlräume können zur Unterbringung mechanischer oder elektrischer Komponenten oder zur Führung von Kabeln und Gestängen dienen. Darüber hinaus kann ein abgeschlossener Hohlraum auch als Resonanzraum für einen Lautsprecher fungieren. Zur Montage der Trägerplatte 2 an die Türinnenverkleidung 11 dienen Befestigungsstellen 23. Die elektrischen Komponenten des Türmoduls werden über ein Kabel 6 und einen Steckverbinder 60 mit Energie versorgt.

In den oberen Bereich der Trägerplatte 2 ist eine Griffschale 22 integriert, in der ein Türöffner (Türinnengriff) lagert; über einen Bowdenzug 220 wird die Betätigungskraft an das Schloß 4 weiterleitet. Alternativ könnte die Griffschale 22 gemäß der vorliegenden Erfindung auf einem mit der A-säulenseitigen Führungsschiene 3b verbundenen und in Richtung auf den Antrieb 200, 201 weisenden separaten Träger angeordnet sein, der (entsprechend den Trägern 40, 40a für das Türschloß und den Außengriffhalter) eine vorfertigbare Einheit mit der Führungsschiene bildet. Die Kontur eines entsprechenden Trägers 40b (der sich - mit Bezug auf Fig. 2 - vor der Trockenraumseite B der Fensterscheibe 8 erstrecken würde) ist in Figur 1 mit gestrichelten Linien angedeutet.

Auf der Trockenraumseite B trägt die Trägerplatte 2 außerdem einen Seiten-Airbag 7, der sich im Bedarfsfall durch eine Sollbruchstelle der (nicht dargestellten) Türinnenverkleidung hindurch entfaltet.

Da die Trägerplatte 2 den Ausschnitt 101 im Türinnenblech 11 nur teilweise abdeckt, ist es zur Abtrennung von Naßraum A und Trockenraum B erforderlich, zumindest den verbleibenden Bereich durch geeignete Mittel abzudecken. Dies kann beispielsweise durch Aufkleben einer entsprechend zugeschnittenen Folie erfolgen.

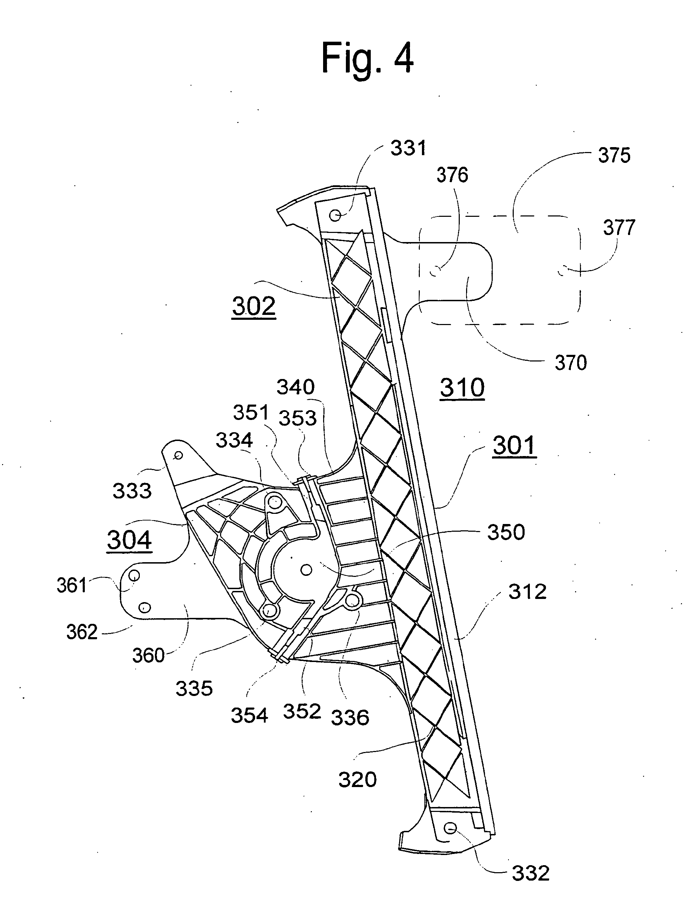

Die in Figur 4 in einer Draufsicht dargestellte Führungsschiene 310 mit einstückig angeformter Lagerstelle 304 in Form einer Grundplatte für eine Seilrolle und mit Anlenkpunkten 334 bis 336 für einen Fensterheberantrieb bzw. einen Lagerdeckel eines Antriebs- oder Getriebegehäuses besteht vorzugsweise aus Kunststoff oder einem teilweise mit Kunststoff umspritzten Metallprofil. Die Führungsschiene 310 ist in einen Führungsbereich 301 und einen Versteifungsbereich 302 unterteilt und weist zwei Befestigungsstellen 331, 332 auf, an denen sie mit einer Befestigungsbasis einer Fahrzeugtür, beispielsweise mit einer Trägerplatte oder einem Türinnenblech verbunden wird.

Der Führungsbereich 301 weist eine Gleitfläche 312 zur Aufnahme eines Fensterscheiben-Mitnehmers oder Gleiters auf, der in Längsrichtung der Führungsschiene 310 auf der Gleitfläche und diese formschlüssig umgreifend entlanggleitet.

Der Versteifungsbereich 302 weist Versteifungselemente 320 in Form von Rippen oder Stegen auf, die senkrecht von der Fläche des Versteifungsbereichs 302 abstehen und ein Waffelmuster bzw. eine Kreuzverrippung bilden. Die Gleitfläche 312 steht mit den Versteifungselementen 320 des Versteifungsbereichs 302 nicht in unmittelbarer Verbindung, da ein zusätzlicher Steg zwischen dem Führungsbereich 301 und dem Versteifungsbereich 302 angeordnet ist und beide Bereiche einstückig miteinander verbindet.

Die an den Versteifungsbereich 302 anschließende und als Grundplatte für Antriebs- und Getriebelemente des Fensterhebers dienende Lagerstelle 304 weist eine Vielzahl senkrecht von der Grundfläche der Lagerstelle 304 abstehende Rippen oder Stege 340 auf, die teilweise strahlenförmig um Anlenkpunkte 334 bis 336 für einen Fensterheberantrieb, einen Lagerdeckel eines Getriebegehäuses oder dergl. angeordnet sind und so zu einer optimalen Kraftübertragung auf den Versteifungsbereich 302 sorgen. In gleicher Weise dienen parallel verlaufende Rippen oder Stege der Erhöhung der Festigkeitsstruktur der Führungsschiene 310.

Die Lagerstelle 304 weist einen hohlzylindrischen Innenraum 350 als Teil eines Antriebsgehäuses auf, von dem zwei Einführungskanäle 351, 352 für ein Antriebsseil ausgehen, dessen Bowdenhülle an Bowdenabstützungen 353, 354 mit dem Antriebsgehäuse verbunden ist. Das Antriebsseil wird jeweils über eine obere und untere Umlenkung im Bereich der Befestigungsstellen 331, 332 mit dem auf dem Führungsbereich 301 verstellbar geführten Mitnehmer verbunden. In den hohlzylindrischen Innenraum 350 des Antriebsgehäuses wird eine Seiltrommel eingelegt, deren zylindrische Außenfläche mit Seilführungen zur Aufnahme des Antriebsseils versehen ist.

Eine weitere Befestigungsstelle 333 dient zur Anlenkung der Lagerstelle 304 bzw. zur zusätzlichen Abstützung der Führungsschiene 310 an der Befestigungsbasis der Fahrzeugtür, d.h. an einer Trägerplatte, einem Türinnenblech oder einem Türmodul, in das die Führungsschiene 310 bei Bedarf integrierbar ist.

An die als Grundplatte ausgebildetet Lagerstelle 304 ist zudem ein Aufnahme in Form eines Trägers 360 mit Befestigungsstellen 361, 362 für ein Türschloß angeformt. Der Träger 360 ist - wie bei Schloßhaltern üblich - hinreichend elastisch ausgebildet, um eine zusätzliche Befestigung des an dem Träger 360 vormontierten Türschlosses an einem tragenden Teil der Fahrzeugkarosserie zu ermöglichen und hierbei fertigungsbedingte Toleranzen ausgleichen zu können. Alternativ kann auch eine bewegliche Verbindung zwischen dem Träger 360 und dem Türschloß vorgesehen sein, wobei vor allem eine Beweglichkeit in Fahrzeuglängsrichtung von Bedeutung ist. Außerdem kann die Integration eines Schloßhalters in eine Grundplatte für einen Antrieb auch bei einer von der Führungsschiene des Fensterhebers unabhängigen, separaten Grundplatte erfolgen.

Am oberen Ende der Führungsschiene ist eine Aufnahme 370, 375 für einen Türinnengriff vorgesehen, die aus einem an der Führungsschiene 310 angeformten Träger 370 sowie einem hiermit verbundenen Türinnengriffhalter 375 mit Befestigungsstellen 376, 377 für einen Türinnengriff besteht. Der Träger 370 ist hierbei derart an der Führungsschiene 310 angeformt, daß der Verbindungsbereich zwischen Führungsschiene und Träger die Bewegung eines Mitnehmers entlang der Gleitfläche 312 nicht behindert. Alternativ kann der Träger 370 auch als ein separates, an der Führungsschiene 310 befestigtes Bauelement ausgebildet sein.

Die gestrichelte Darstellung des Türinnengriffhalters 375 soll dabei darauf hinweisen, daß es sich um ein optionalen Bestandteil der vorgefertigten Baueinheit aus der Führungsschiene 310 und tragenden Bauteilen 360, 370, 375 des Schließsystems der Fahrzeugtür handelt. Andererseits könnten zusätzlich noch weitere. Elemente des Schließsystems, wie z.B. das Tüschloß oder der Türinnengriff selbst, an den entsprechenden Aufnahmen vormontiert sein. Der Türinnengriff dient zum Öffnen der Fahrzeugtür vom Fahrzeuginnenraum her und ist hierzu über geeignete Betätigungsstange mit dem Türschloß verbunden.

Ein solche Führungsschiene 310 mit vorgefertigten Aufnahmen für das Türschloß und den Türinnengriff eignet sich insbesondere zu Verwendung bei einem sogenannten innenliegenden Fensterheber, bei dem die Fensterscheibe zwischen dem Türaußenblech und der Fensthebermechanik (Führungsschiene etc.) verläuft.

Es sei noch bemerkt, daß Fig. 4 eine Rückansicht der Führungsschiene 310 darstellt, also eine Ansicht von außerhalb des Fahrzeugs. D.h. bei einem Einbau dieser Führungsschiene 310 in eine Fahrzeugtür 1 gemäß Figur 3 (unter Verwendung einer den Ausschnitt 101 abdeckenden Trägerplatte) würde die Aufnahme für das Türschloß in Richtung auf das hintere (B-säulenseitige) Ende der Fahrzeugtür weisen, während die Aufnahme für den Türinnengriff in Richtung auf das vordere (A-säulenseitige) Ende der Fahrzeugtür wiese.

Die Führungsschiene kann wahlweise komplett oder teilweise aus Kunststoff gefertigt werden. Durch die Unterteilung der Führungsschiene in einen Führungsbereich und einen Versteifungsbereich ist die Wahl eines Zwei- oder Mehrkomponenten-Spritzgießverfahrens möglich, bei dem der Versteifungsbereich aus einem Werkstoff mit hoher Festigkeit und hohem E-Modul besteht, und für den Führungsbereich ein tribologisch günstiger Werkstoff gewählt wird, der auf niedrige Reibbeiwerte, geringen Abrieb und niedrigen Geräuschpegel hin optimiert ist.

In einer alternativen Ausführungsform kann der Versteifungsbereich der Führungsschiene auch aus einem Metallprofil mit günstigen mechanischen Eigenschaften, das ein hohes Widerstandsmoment bei relativ geringem Gewicht gewährleistet, hergestellt werden, während der Führungsbereich der besseren tribologischen Eigenschaften wegen aus Kunststoff besteht. Beide Bereiche können form- und/oder kraftschlüssig miteinander verbunden werden, beispielsweise durch Umspritzen des Metallprofils mit einem Kunststoff, der neben der Führungsfunktion auch zur gezielten weiteren Versteifung des Metallprofils beiträgt, indem durch Verrippungen und Aussteifungen eine Hybridstruktur erzeugt wird, die sowohl biege- als auch torsionssteif ist.

Hinsichtlich weiterer Einzelheiten betreffend die (zumindest teilweise) Herstellung einer Führungschiene aus Kunststoff sei auf die deutsche Patentanmeldung 198 38 347 verwiesen.

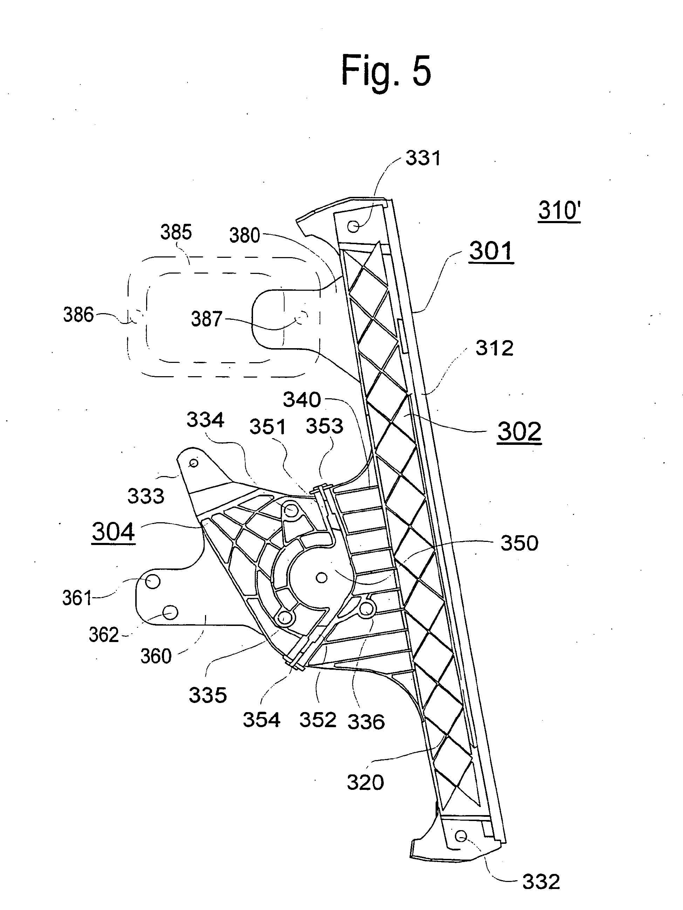

Figur 5 zeigt eine Abwandlung des Ausführungsbeispiels aus Figur 4, wobei der einzige Unterschied darin besteht, daß die Führungsschiene 310' gemäß Figur 5 anstelle einer Aufnahme für einen Türinnengriff eine Aufnahme 380, 385 für einen Türaußengriff aufweist, die aus einem im oberen Bereich der Führungsschiene 310' angeformten Träger 380 sowie einem hieran befestigten Türaußengriffhalter 385 mit Befestigungsstellen für einen Türaußengriff besteht und die in Richtung auf das hintere (B-säulenseitige) Ende einer Fahrzeugtür (vergl. Fig. 3) weist.

Die in Figur 5 dargestellte Führungsschiene 310' mit vorgefertigten Aufnahmen für das Türschloß und den Türaußengriff eignet sich insbesondere zu Verwendung bei einem sogenannten außenliegenden Fensterheber, bei dem die Fensthebermechanik (Führungsschiene etc.) zwischen dem Türaußenblech und der Fensterscheibe verläuft.

Selbstverständlich kann aber auch eine einzelne Führungsschiene sowohl mit einer Aufnahme für einen Türinnengriff als auch mit einer Aufnahme für einen Türaußengriff versehen sein. Hierbei wäre es erforderlich (je nachdem, ob es sich um einen innenliegenden oder einen außenliegenden Fensterheber handelt) eine der beiden Aufnahme zu der der Führungsschiene abgewandte Seite der Fensterscheibe zu führen, wie es z.B. in Figur 2 anhand des Trägers 40 für den Türaußengriffahalter 5 illustriert wird, der auf der den Führungsschienen 3a, 3b abgewandten Seite der Fensterscheibe 8 angeordnet ist.

## Patentansprüche

1. Anordnung zum Einbau in eine Fahrzeugtür mit
- einem Fensterheber zum Heben und Senken einer Fensterscheibe der Fahrzeugtür, der aus einer Antriebseinheit und einem Mechanismus zum Übertragen von Antriebskraft von der Antriebseinheit auf die Fensterscheibe besteht,
- einer Führungsschiene (310, 310') des Übertragungsmechanismus, entlang der ein Mitnehmer der Fensterscheibe geführt wird, und
- einem Schließsystem (4, 40, 40a, 5, 50; 360, 370, 375, 380, 385) zum Verschließen und zum Öffnen der Fahrzeugtür,
wobei der Fensterheber und das Schließsystem (4, 40, 40a, 5, 50; 360, 370, 375, 380, 385) zur Befestigung an einer tragenden Platte (2) der Fahrzeugtür vorgesehen sind,
**dadurch gekennzeichnet,**
**daß** zumindest ein tragendes Teil (360, 370, 380) des Schließsystems (4, 40, 40a, 5, 50; 360, 370, 375, 380, 385) an der zumindest teilweise aus Kunststoff bestehenden Führungsschiene (310, 310') angeformt ist.

2. Anordnung nach Anspruch 1, **dadurch gekennzeichnet, daß** mindestens ein tragendes Bauteil des Fensterhebers zugleich zur Aufnahme eines Funktionselementes des Schließsystems dient.

3. Anordnung nach Anspruch 1 oder 2, **dadurch gekennzeichnet, daß** zumindest ein Teil des Schließsystems (4, 40, 40a, 5, 50; 360, 370, 375, 380, 385) eine vorgefertigte Baueinheit mit der Antriebseinheit des Fensterhebers, insbesondere eines Seilfensterhebers, bildet.

4. Anordnung nach Anspruch 3, **dadurch gekennzeichnet, daß** eine zur Aufnahme der Antriebseinheit vorgesehene Grundplatte (304) eine vorgefertigte Baueinheit mit der Führungsschiene (310, 310') bildet.

5. Anordnung nach Anspruch 4, **dadurch gekennzeichnet, daß** die die Grundplatte (304) einstückig an der Führungsschiene (310, 310') angeformt ist.

6. Anordnung nach einem der vorhergehenden Ansprüche, **dadurch gekennzeichnet, daß** der Teil des schließsystems (4, 40, 40a, 5, 50; 360, 370, 375, 380, 385), der eine Baueinheit mit einer Baugruppe (3a, 3b; 310, 310') des Fensterhebers bildet, eines oder mehrere der folgenden Bauelemente umfaßt:
- eine Aufnahme (40a, 360) für ein Türschloß (4),
- ein Türschloß (4),
- eine Aufnahme (380, 385) für einen Türaußengriff,
Aufnahme (5, 40) für einen Türaußengriff eine vorgefertigte Baueinheit mit der B-säulenseitigen Führungsschiene (3a) des Fensterhebers bilden.

7. Anordnung nach Anspruch 6, **dadurch gekennzeichnet, daß** die Aufnahme (360) für das Türschloß eine vorgefertigte Baueinheit mit der Grundplatte (304) für die Antriebseinheit bildet.

8. Anordnung nach Anspruch 3 und 6, **dadurch gekennzeichnet, daß** bei einem außenliegenden Fensterheber zumindest die Aufnahme (380, 385) für den Türaußengriff eine vorgefertigte Baueinheit mit der Führungsschiene (310') bildet.

9. Anordnung nach Anspruch 3 und 6, **dadurch gekennzeichnet, daß** bei einem innenliegenden Fensterheber zumindest die Aufnahme (370, 375) für den Türinnengriff eine vorgefertigte Baueinheit mit der Führungsschiene (310) bildet.

10. Anordnung nach einem der Ansprüche 3 bis 9, **dadurch gekennzeichnet, daß** der Fensterheber als doppelsträngiger Seilfensterheber mit zwei nebeneinander verlaufenden Führungsschienen (3a, 3b) ausgebildet ist und daß eine Aufnahme (40, 40a) für ein Türschloß (4) und eine Aufnahme (5, 40) für einen Türaußengriff eine vorgefertigte Baueinheit mit der B-säulenseitigen Führungsschiene (3a) des Fensterhebers bilden.

11. Anordnung nach einem der Ansprüche 3 bis 10, **dadurch gekennzeichnet, daß** eine Aufnahme (40, 40a) für ein Türschloß (4) mit einer Aufnahme (5, 40) für einen Türaußengriff verbunden ist und daß die Aufnahme (5, 40) für den Türaußengriff zusätzlich mit der Führungsschiene (3a) verbunden ist.

12. Anordnung nach einem der Ansprüche 3 bis 10, **dadurch gekennzeichnet, daß** ein Türschloß (4) und ein Türaußengriffhalter (5) über einen gemeinsamen Träger (40, 40a) an der Führungsschiene (3a) befestigt sind.

13. Anordnung nach einem der Ansprüche 5 bis 12, **dadurch gekennzeichnet, daß** das jeweilige Funktionselement (4) des Schließsystems (4, 40, 40a, 5, 50; 360, 370, 375, 380, 385) auf dem zugehörigen Halteelement (40, 40a) vormontiert ist.

14. Anordnung nach einem der Ansprüche 3 bis 12, **dadurch gekennzeichnet, daß** die Führungsschiene (3a, 3b) des Fensterhebers zur verschiebbaren Lagerung an der tragenden Platte (2) ausgebildet ist.

15. Anordnung nach einem der Ansprüche 3 bis 12, **dadurch gekennzeichnet, daß** die Führungsschiene (3a, 3b) auf der tragenden Platte (2) entlang der Längsrichtung des Fahrzeugs verschieblich ist.

16. Anordnung nach einem der vorhergehenden Ansprüche, **dadurch gekennzeichnet, daß** die tragende Platte (2) der Fahrzeugtür als Türinnenblech oder als großflächige Trägerplatte für ein Türmodul, die auf einen entsprechenden Ausschnitt im Türinnenblech aufgesetzt wird, ausgebildet ist.

17. Anordnung nach einem der vorhergehenden Ansprüche, **dadurch gekennzeichnet, daß** die tragende Platte (2) eine Ausnehmung zur Montage des Schließsystems (4, 40, 40a, 5, 50; 360, 370, 375, 380, 385) definiert.

## Claims

1. System to be fitted into a vehicle door having
- a window lifter for lifting and lowering a window pane of a vehicle door and consisting of a drive unit and a mechanism for transferring drive force from the drive unit to the window pane,
- a guide rail (310, 310') of the transfer mechanism along which a follower of the window pane is guided, and
- a closing mechanism (4, 40, 40a, 41, 5, 50; 360, 370, 375, 380, 385) for closing and opening the vehicle door,
wherein the window lifter and the closing mechanism (4, 40, 40a, 41, 5, 50; 360, 370, 375, 380, 385) are provided for fixing on a supporting plate (2) of the vehicle door,
**characterised in that**
at least a supporting part (360, 370, 380) of the closing mechanism (4, 40, 40a, 41, 5, 50; 360, 370, 375, 380, 385) is moulded on the guide rail (310, 310') which consists at least in part of plastics.

2. System according to claim 1, **characterised in that** at least one supporting structural part of the window lifter serves at the same time to hold a functional element of the closing mechanism.

3. System according to claim 1 or 2, **characterised in that** at least a part of the closing mechanism (4, 40, 40a, 5, 50; 360, 370, 375, 380, 385) forms a prefabricated structural unit with the drive unit of the window lifter, more particularly a cable window lifter.

4. System according to claim 3, **characterised in that** a base plate (304) provided for holding the drive unit forms a prefabricated structural unit with the guide rail (310, 310').

5. System according to claim 4, **characterised in that** the base plate (304) is moulded in one piece on the guide rail (310, 310').

6. System according to one of the preceding claims, **characterised in that** the part of the closing mechanism (4, 40, 40a, 5, 50; 360, 370, 375, 380, 385) which forms a structural unit with a structural group (3a, 3b; 310, 310') of the window lifter comprises one or more of the following structural elements:
- a socket (40a, 360) for a door lock (4)
- a door lock (4)
- a socket (380, 385) for a door outside handle,
sockets (5,40) for a door outer handle of a preassembled component forming with the B-pillar guide tracks for the window lifter.

7. System according to claim 6, **characterised in that** the socket (360) for the door lock forms a prefabricated structural unit with the base plate (304) for the drive unit.

8. System according to claim 3 and 6, **characterised in that** in the case of an outer window lifter at least the socket (380, 385) for the door outside handle forms a prefabricated structural unit with the guide rail (310').

9. System according to claim 3 and 6, **characterised in that** in the case of an inner window lifter at least the socket (370, 375) for the door inside handle forms a prefabricated structural unit with the guide rail (310).

10. System according to one of claims 3 to 9, **characterised in that** the window lifter is formed as a double-strand cable window lifter having two guide rails (3a, 3b) running side by side and that a socket (40, 40a) for a door lock (4) and a socket (5, 40) for a door outside handle form a prefabricated structural unit with the guide rail (3a) of the window lifter on the B-pillar side.

11. System according to one of claims 3 to 10, **characterised in that** a socket (40, 40a) for a door lock (4) is connected to a socket (5, 40) for a door outside handle and that the socket (5, 40) for the door outside handle is connected additionally to the guide rail (3a).

12. System according to one of claims 3 to 10, **characterised in that** a door lock (4) and a door outside handle holder (5) are fixed on the guide rail (3a) through a common support (40, 40a).

13. System according to one of claims 5 to 12, **characterised in that** the relevant functional element (4) of the closing mechanism (4, 40, 40a, 5, 50; 360, 370, 375, 380, 385) is prefitted on the associated holding element (40, 40a).

14. System according to one of claims 3 to 12, **characterised in that** the guide rail (3a, 3b) of the window lifter is formed for displaceable bearing on the supporting plate (2).

15. System according to one of claims 3 to 12, **characterised in that** the guide rail (3a, 3b) is displaceable on the supporting plate (2) along the longitudinal direction of the vehicle.

16. System according to one of the preceding claims, **characterised in that** the supporting plate (2) of the vehicle door is formed as a door inside panel or as a large surface support plate for a door module which is fitted onto a corresponding cut-out section in the door inside panel.

17. System according to one of the preceding claims, **characterised in that** the supporting plate (2) defines a recess for assembling the closing mechanism (4, 40, 40a, 5, 50; 360, 370, 375, 380, 385).

## Revendications

1. Ensemble à monter dans une porte de véhicule, comprenant :
-- un lève-vitre pour faire monter et descendre une vitre de fenêtre de la porte de véhicule, qui est constitué par une unité d'entraînement et par un mécanisme pour transmettre la force d'entraînement de l'unité d'entraînement à la vitre de fenêtre,
-- un rail de guidage (310, 310') du mécanisme de transmission, le long duquel est guidé un élément d'entraînement de la vitre de fenêtre, et
-- un système de fermeture (4, 40, 40a, 5, 50 ; 360, 370, 375, 380, 385) pour fermer et pour ouvrir la porte de véhicule,
le lève-vitre et le système de fermeture (4, 40, 40a, 5, 50 ; 360, 370, 375, 380, 385) étant prévus pour être fixés sur une plaque portante (2) de la porte de véhicule,
**caractérisé en ce qu'**au moins une partie portante (360, 370, 380) du système de fermeture (4, 40, 40a, 5, 50 ; 360, 370, 375, 380, 385) est conformée sur le rail de guidage (310, 310') réalisé au moins partiellement en matière plastique.

2. Ensemble selon la revendication 1, **caractérisé en ce qu'**au moins un composant portant du lève-vitre sert simultanément à recevoir un élément fonctionnel du système de fermeture.

3. Ensemble selon la revendication 1 ou 2, **caractérisé en ce qu'**une partie au moins du système de fermeture (4, 40, 40a, 5, 50 ; 360, 370, 375, 380, 385) forme une unité structurelle préfabriquée avec l'unité d'entraînement du lève-vitre, en particulier un lève-vitre à câble.

4. Ensemble selon la revendication 3, **caractérisé en ce qu'**une plaque de base (304) prévue pour recevoir l'unité d'entraînement forme une unité structurelle préfabriquée avec le rail de guidage (310, 310').

5. Ensemble selon la revendication 4, **caractérisé en ce que** la plaque de base (304) est conformée d'une seule pièce sur le rail de guidage (310, 310').

6. Ensemble selon l'une des revendications précédentes, **caractérisé en ce que** la partie du système de fermeture (4, 40, 40a, 5, 50 ; 360, 370, 375, 380, 385) qui forme une unité structurelle avec un sous-groupe (3a, 3b ; 310, 310') du lève-vitre comprend un ou plusieurs des éléments structurels suivants :
- un logement (40a, 360) pour une serrure de porte (4),
- - une serrure de porte (4),
- - un logement (380, 385) pour une poignée extérieure de porte,
et dans lequel des logements (5,40) pour une poignée de porte extérieure forment une unité structurelle préfabriquée avec les rails de guidage (3a) du lève-vitre du côté du montant B du véhicule.

7. Ensemble selon la revendication 6, **caractérisé en ce que** le logement (360) pour la serrure de porte forme une unité structurelle préfabriquée avec la plaque de base (304) pour l'unité d'entraînement.

8. Ensemble selon la revendication 3 et 6, **caractérisé en ce que** dans le cas d'un lève-vitre situé à l'extérieur, au moins le logement (380, 385) pour la poignée extérieure de porte forme une unité structurelle préfabriquée avec le rail de guidage (310').

9. Ensemble selon la revendication 3 et 6, **caractérisé en ce que** dans le cas d'un lève-vitre situé à l'intérieur, au moins le logement (370, 375) pour la poignée intérieure de porte forme une unité structurelle préfabriquée avec le rail de guidage (310).

10. Ensemble selon l'une des revendications 3 à 9, **caractérisé en ce que** le lève-vitre est réalisé sous la forme d'un lève-vitre à câble à double gaine avec deux rails de guidage (3a, 3b) disposés l'un à côté de l'autre, et **en ce qu'**un logement (40, 40a) pour une serrure de porte (4) et un logement (5, 40) pour une poignée extérieure de porte forment une unité structurelle préfabriquée avec le rail de guidage (3a) du lève-vitre du côté du montant B du véhicule.

11. Ensemble selon l'une des revendications 3 à 10, **caractérisé en ce qu'**un logement (40, 40a) pour une serrure de porte (4) est relié à un logement (5, 40) pour une poignée extérieure de porte, et **en ce que** le logement (5, 40) pour la poignée extérieure de porte est en supplément relié au rail de guidage (3a).

12. Ensemble selon l'une des revendications 3 à 10, **caractérisé en ce qu'**une serrure de porte (4) et un support (5) pour poignée extérieure de porte sont fixés sur le rail de guidage (3a) via un support commun (40, 40a).

13. Ensemble selon l'une des revendications 5 à 12, **caractérisé en ce que** l'élément fonctionnel respectif (4) du système de fermeture (4, 40, 40a, 5, 50 ; 360, 370, 375, 380, 385) est prémonté sur l'élément de maintien associé (40, 40a).

14. Ensemble selon l'une des revendications 3 à 12, **caractérisé en ce que** le rail de guidage (3a, 3b) du lève-vitre est réalisé de manière à être monté en translation sur la plaque portante (2).

15. Ensemble selon l'une des revendications 3 à 12, **caractérisé en ce que** le rail de guidage (3a, 3b) est monté en translation sur la plaque portante (2) le long de la direction longitudinale du véhicule.

16. Ensemble selon l'une des revendications précédentes, **caractérisé en ce que** la plaque portante (2) de la porte de véhicule est réalisée sous forme de tôle intérieure de porte ou sous forme de plaque portante à grande surface pour un module de porte, qui est posée sur une découpe correspondante dans la tôle intérieure de porte.

17. Ensemble selon l'une des revendications précédentes, **caractérisé en ce que** la plaque portante (2) définit un évidement pour le montage du système de fermeture (4, 40, 40a, 5, 50 ; 360, 370, 375, 380, 385).
